# EUROPEAN PATENT APPLICATION

(11) **EP 4 597 289 A1**
(43) Date of publication of application: **06.08.2025**
(21) Application number: 23872032.0
(22) Date of filing: 19.09.2023
(51) Int. Cl.: G06F 3/12, B41J 29/38

(54) **INFORMATION PROCESSING DEVICE, CONTROL METHOD FOR INFORMATION PROCESSING DEVICE, AND APPLICATION INSTALLED ON INFORMATION PROCESSING DEVICE**

(30) Priority: 30.09.2022 JP 2022157626
(71) Applicant: Canon Kabushiki Kaisha, Ohta-ku Tokyo 146-8501 (JP)
(72) Inventor: KITABATAKE, Hironobu, Tokyo 146-8501 (JP)
(74) Representative: Canon Europe Limited
(86) International application number: PCT/JP2023/033873
(87) International publication number: WO 2024/070804

(57) **Abstract**

An application according to the present application is an application that is installed on an information processing apparatus and includes acquiring a setting value set in an object displayed on the information processing apparatus, and providing status information acquired from a printing apparatus and selected based on the acquired setting value acquired in the acquiring to an operating system of the information processing apparatus.

## Description

### Technical Field

The present invention relates to an information processing apparatus, a control method for an information processing apparatus, and an application installed on an information processing apparatus.

### Background Art

Conventionally, in a mobile operating system (OS), there is a technique for transmitting print data to a printing apparatus and printing the print data. There is a case where a printing framework termed a printing system is built into the mobile OS. Thus, a printing vendor can achieve a print function.

An OS mounted on a mobile terminal such as Android (registered trademark) includes a "printing system" that provides a common print function to applications. The printing system has a mechanism termed a "print plugin" in which printing apparatus vendors can add in a dependence process for adapting the printing system to printing apparatuses of the vendors in a plugin format. The print plugin can be downloaded from an application store that distributes applications and installed.

By using a printing system, a user can search for a printing apparatus and perform printing through a user interface (UI) of the printing system (Patent Literature 1). A print plugin sends ability information regarding a printing apparatus to the printing system and thereby can reflect the functions of the printing apparatus on a print settings screen of the printing system. For example, it is possible to display all sheet sizes with which the printing apparatus is compatible, and switch the enabling and disabling of a duplex function.

### Citation List

### Patent Literature

Patent Literature 1: Japanese Patent Application Laid-Open No. 2017-27321

### Summary of Invention

### Technical Problem

As described above, in a printing system provided by an operating system of an information processing apparatus, setting items to be displayed are limited. Moreover, items to be displayed are limited to setting items, and for example, information regarding a consumable product of a printing apparatus or information regarding an error that occurs in the printing apparatus is not displayed. Further, status information according to the settings of a user is not provided.

The present invention is directed to enabling a user to easily confirm information regarding the state of a printing apparatus in an information processing apparatus. Solution to Problem

An application according to the present application is an application that is installed on an information processing apparatus and includes acquiring a setting value set in an object displayed on the information processing apparatus, and providing status information acquired from a printing apparatus and selected based on the acquired setting value acquired in the acquiring to an operating system of the information processing apparatus.

### Advantageous Effects of Invention

According to the present invention, it is possible to enable a user to easily confirm information regarding the state of a printing apparatus in an information processing apparatus.

### Brief Description of Drawings

[Fig. 1] Fig. 1 is a diagram illustrating an example of a printing system according to an exemplary embodiment.
[Fig. 2] Fig. 2 is a diagram illustrating examples of hardware configurations of an information processing apparatus and a printing apparatus according to the exemplary embodiment.
[Fig. 3] Fig. 3 is a diagram illustrating examples of software configurations of the information processing apparatus and the printing apparatus according to the exemplary embodiment.
[Fig. 4] Fig. 4 is a diagram illustrating an example of a screen of an application displayed on a display of the information processing apparatus according to the exemplary embodiment.
[Fig. 5A] Fig. 5A is a diagram illustrating an example of a screen displayed by the printing system of the information processing apparatus according to the exemplary embodiment.
[Fig. 5B] Fig. 5B is a diagram illustrating an example of a screen displayed by the printing system of the information processing apparatus according to the exemplary embodiment.
[Fig. 5C] Fig. 5C is a diagram illustrating an example of a screen displayed by the printing system of the information processing apparatus according to the exemplary embodiment.
[Fig. 6A] Fig. 6A is a diagram illustrating an example of a screen displayed by a print plugin installed on the information processing apparatus according to the exemplary embodiment.
[Fig. 6B] Fig. 6B is a diagram illustrating an example of a screen displayed by the print plugin installed on the information processing apparatus according to the exemplary embodiment.
[Fig. 6C] Fig. 6C is a diagram illustrating an example of a screen displayed by the print plugin installed on the information processing apparatus according to the exemplary embodiment.
[Fig. 6D] Fig. 6D is a diagram illustrating an example of a screen displayed by the print plugin installed on the information processing apparatus according to the exemplary embodiment.
[Fig. 7] Fig. 7 is a schematic diagram of option information acquired from the printing apparatus according to the exemplary embodiment.
[Fig. 8] Fig. 8 is a flowchart illustrating processing executed by a print plugin according to a first exemplary embodiment.
[Fig. 9] Fig. 9 is a flowchart illustrating processing regarding display of status information executed by the print plugin according to the first exemplary embodiment.
[Fig. 10] Fig. 10 is a table illustrating an example of status information acquired from the printing apparatus according to the exemplary embodiment.
[Fig. 11] Fig. 11 is a flowchart illustrating processing executed by the print plugin when displaying an extended settings screen according to the exemplary embodiment.
[Fig. 12] Fig. 12 is a flowchart illustrating processing regarding printing using the print plugin according to the exemplary embodiment.
[Fig. 13] Fig. 13 is a flowchart illustrating processing executed by a print plugin according to a second exemplary embodiment.
[Fig. 14] Fig. 14 is a flowchart illustrating processing regarding display of an extended settings screen by a print plugin according to a third exemplary embodiment.
[Fig. 15] Fig. 15 is a flowchart of processing executed to display status information by the print plugin according to the third exemplary embodiment.
[Fig. 16] Fig. 16 is a flowchart illustrating processing executed by a print plugin according to a fourth exemplary embodiment.
[Fig. 17] Fig. 17 is a flowchart illustrating processing executed by the printing system and the print plugin according to the exemplary embodiment.

### Description of Embodiments

With reference to the drawings, the best mode for carrying out the present invention will be described below.

### <First Exemplary Embodiment>

First, the overall configuration of a system according to the present exemplary embodiment is described.

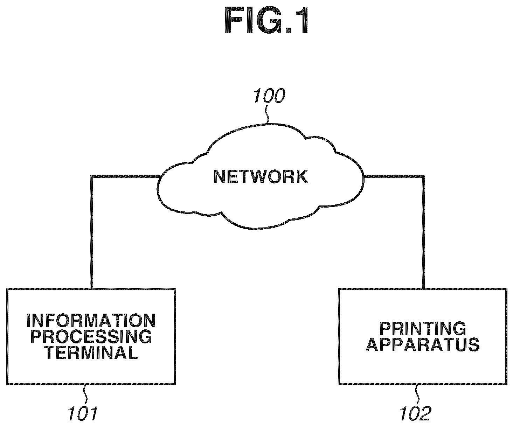

Fig. 1 illustrates an example of the overall configuration of the system according to the present exemplary embodiment. In this system, a network 100, an information processing apparatus 101, and a printing apparatus 102 are connected to each other. At this time, a plurality of information processing terminals and a plurality of printing apparatuses may exist on the network. The network 100 employs a standard network connection, and may be in either of the forms of the Internet and an intranet. For example, examples of the connection method include a method for forming a network via a Wi-Fi router and a method for directly connecting the information processing terminal 110 and the printing apparatus 102 using Wi-Fi Direct. In either of the methods, any connection form may be employed so long as the information processing apparatus 101 and the printing apparatus 102 are connected to each other via a network.

The information processing apparatus 101 is an apparatus such as a tablet terminal, a personal computer (PC), or a smartphone and is an apparatus on which software that generates print data to be transmitted to the printing apparatus 102 and a printer driver are installed.

The printing apparatus 102 is an apparatus that receives print data generated by the information processing apparatus 101 and performs printing on a recording medium such as a sheet or cloth. The printing method of the printing apparatus 102 may be an electrophotographic method using a laser beam, an inkjet method, or another method.

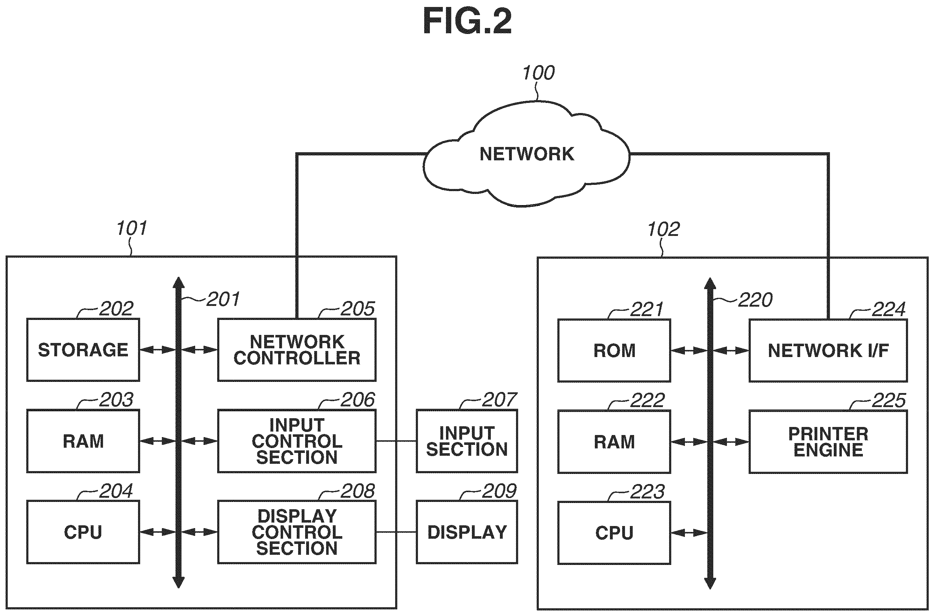

Next, with reference to Fig. 2, the configurations of the information processing apparatus 101 and the printing apparatus 102 according to the exemplary embodiment of the present invention are described.

The information processing apparatus 101 is a mobile terminal (a smartphone or a tablet) or a personal computer. On the information processing apparatus 101, an operating system for this terminal and programs that control a telephone call and data communication operate.

The information processing apparatus 101 can connect to the network 100 using a network controller 205. The connection to the network using the network controller 205 may be a wireless connection or a wireless connection.

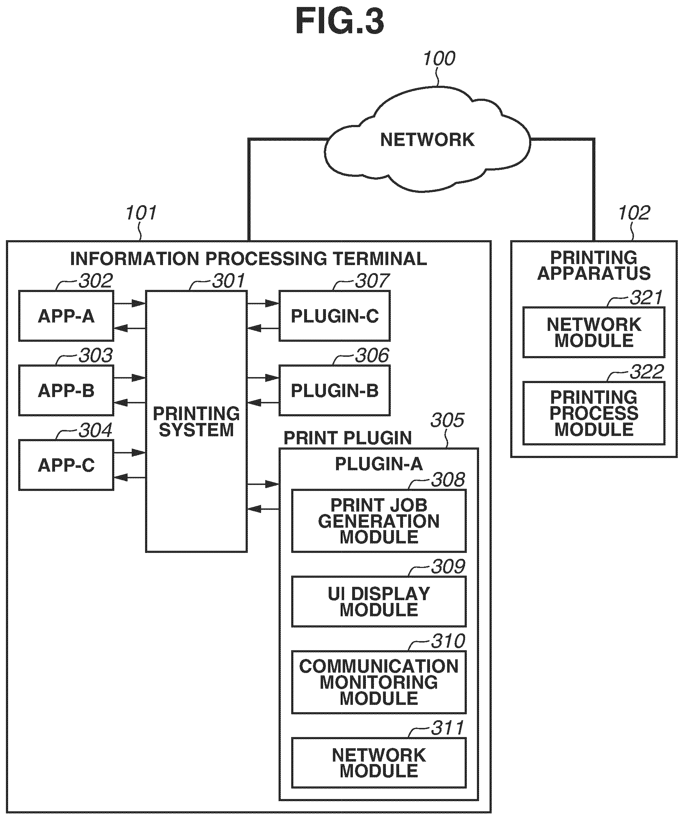

Hardware components are connected to a system bus 201. Storage 202 is a non-volatile storage device and stores an operating system (OS) of the information processing apparatus 101, applications that control a telephone call and data communication, various operation mode settings that need to be held also after the information processing apparatus 101 restarts, and an operation log. Examples of the application that is stored in the storage 202 and controls data communication include email software and a web browser. These pieces of information stored in the storage 202 are loaded into a random-access memory (RAM) 203 and processed by a central processing unit (CPU) 204. Additionally, the CPU 204 executes processing based on programs loaded into the RAM 203, thereby achieving the software configuration of the information processing apparatus 101 as illustrated in Fig. 3 and the processes of steps in flowcharts described below.

The RAM 203 is a work memory area for executing a program. The RAM 203 is also a memory for temporarily storing image information generated by an application when printing is performed. The network controller 205 is a chip for controlling network communication. Wi-Fi, Wi-Fi Direct, or a public line such as third generation (3G) or fourth generation (4G) is used for the communication.

A display control section 208 controls information displayed on a display 209 of the information processing apparatus 101. An input control section 206 controls information indicated by a user through an input section 207, such as a button and a touch panel, of the information processing apparatus 101. Using the display control section 208 and the input control section 206, an application on the information processing apparatus 101 provides network communication information and various pieces of information regarding the information processing terminal 110 to the user.

The printing apparatus 102 includes a network interface (I/F) 224. The network I/F 224 is used to connect to the information processing apparatus 101 via the network 100.

Hardware blocks included in the printing apparatus 102 are connected together via a system bus 220. Based on a control program, a CPU 223 outputs an image signal as output information to a printing apparatus engine 225 connected to the system bus 220. The control program is stored in a read-only memory (ROM) 221. The printing apparatus 102 can perform a communication process with the information processing apparatus 101 via the network I/F 224 and is configured to notify the information processing apparatus 101 of information in the printing apparatus 102. Further, the CPU 223 executes processing based on an application program stored in the ROM 221. A RAM 222 functions as a main memory or a work area for the CPU 223. The RAM 222 is used as an output information loading area, an environment data storage area, or a non-volatile random-access memory (NVRAM). The ROM 221 stores the control program for the CPU 223, font data used to generate the output information, and information used in the printing apparatus 102. The printing apparatus engine 225 outputs an image signal as output information. The system bus 220 connects these devices.

Fig. 3 is a block diagram illustrating software configurations according to the present exemplary embodiment.

First, the software configuration of the information processing apparatus 101 is illustrated. Each of modules included in the information processing apparatus 101 is a program module present as a file saved in the storage 202. Then, when executed, a program is loaded into the RAM 203 and executed by the OS or another module that uses a module of the program. The processing described in the present exemplary embodiment is achieved by reading an application and a program for each module (software) stored in the storage 202 into the RAM 203 where necessary and by the CPU 204 executing the application and the program.

A printing system 301 provides a common printing interface to applications such as an app-A 302, an app-B 303, and an app-C 304. The printing system 301 is a system provided by the OS of the information processing apparatus 101 and is a system for displaying a printing apparatus search function and a print settings screen.

The app-A 302, the app-B 303, and the app-C 304 are general applications that operate on the OS of the information processing apparatus 101. The app-A 302, the app-B 303, and the app-C 304 are applications such as a mweb browser, a Portable Document Format (PDF) viewer, an Office viewer, an image viewer, a photograph app, and an email app. In these apps, printing interfaces defined by the printing system are implemented.

Print plugins such as a plugin-A 305, a plugin-B 306, and a plugin-C 307 are present as services for providing functions to the printing system according to instructions from the printing system. Examples of the functions provided to the printing system 301 by the print plugins include a printing apparatus search function for searching for a printing apparatus on the network, a print function, a print setting function, and a status notification function. On the information processing apparatus 101, a plurality of print plugins as in the plugin-A 305, the plugin-B 306, and the plugin-C 307 in Fig. 3 can be installed. Each print plugin is an application provided by a printer vendor or another vendor and can be used by the user downloading the print plugin from an application store and installing the print plugin on the information processing apparatus 101.

If the print plugin is installed on the information processing apparatus 101, information regarding the print plugin is registered in the printing system 301. The information regarding the print plugin is registered in the printing system 301, whereby the printing system 301 can call the functions of the print plugin.

The present exemplary embodiment is described using the plugin-A 305. The plugin-B 306 and the plugin-C 307 also have configurations similar to that of the plugin-A 305.

A print job generation module 308 receives a command from the printing system 301, and based on information in the storage 202 and the RAM 203, generates a print job that can be printed by the printing apparatus 102. The format of the print job to be generated may be a format corresponding to the printer vendor that distributes the print plugin, or may be a format compliant with a standard specification such as the Internet Printing Protocol (IPP).

A user interface (UI) display module 309 displays an extended settings screen specific to the plugin-A 305. The printing system 301 calls the extended settings screen in the print plugin and causes the print plugin to display the extended settings screen. On the extended settings screen, more settings than basic settings that can be made in the printing system 301 can be made. As described above, the print plugin can operate as a print setting application.

A communication management module 310 is a module that controls communication between the plugin-A 305 that is a print plugin and the printing apparatus 102. The communication management module 310 manages the acquisition of the ability of the printing apparatus, the acquisition of the state of the printing apparatus, a search for a printing apparatus, and the transmission of a print job.

A network module 311 is a module that connects the plugin-A 305 and a printing apparatus such as the printing apparatus 102. The network module 311 provides the function of communicating with an external device using a protocol such as Hypertext Transfer Protocol (HTTP) or Simple Network Management Protocol (SNMP).

Next, the software configuration of the printing apparatus 102 is described.

A network module 321 is a module that performs communication between the printing apparatus 102 and the information processing apparatus 101. The network module 321 provides the function of communicating with an external device using a protocol such as HTTP or SNMP.

A printing process module 322 is a module for creating image data and sending drawing data to the printing apparatus engine 225 to execute printing.

On the network, many printing apparatuses (not illustrated) may also exist in addition to the printing apparatus 102.

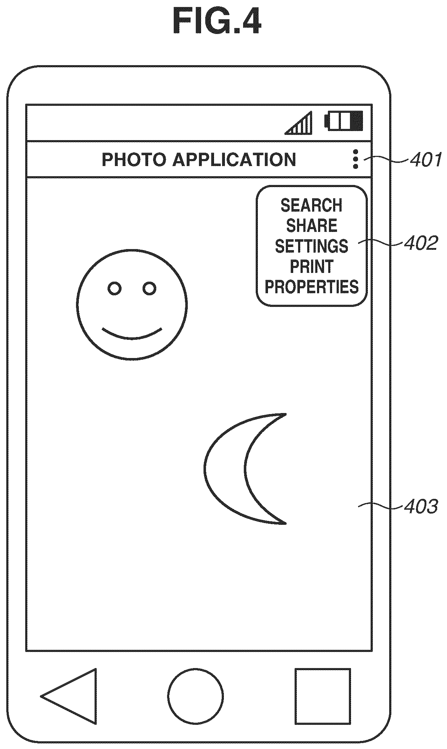

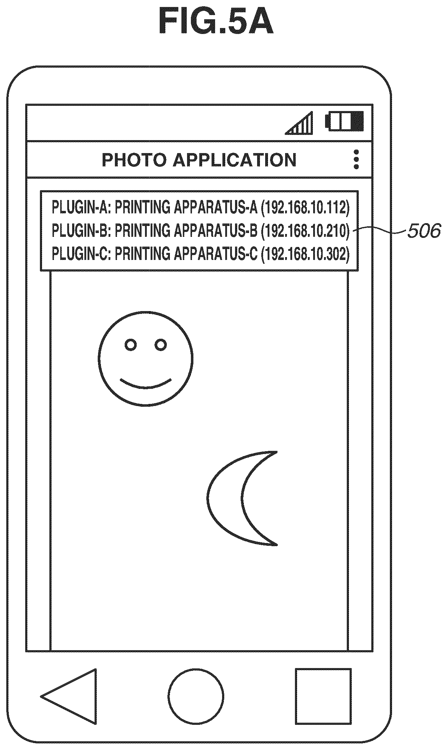

Next, a procedure for starting the printing system 301 is described. Fig. 4 illustrates an example of a UI in a case where an application such as the app-A 302 uses the print function using the printing system. The description is given on the assumption that the app-A 302 is a photograph display app. An area 403 is an area that displays an image of a photograph stored in the information processing apparatus 101. A menu button 401 is an object for displaying a menu list for selecting processing on the photograph displayed in the area 403. If the user selects the menu button 401, the menu list is displayed. The user can call a printing system screen of the OS as illustrated in Fig. 5A by selecting a print menu 402.

Fig. 5A illustrates a screen displayed by the printing system 301 provided by the OS. An area 506 in Fig. 5A displays a list of printing apparatuses that can be selected as a printing apparatus for use in printing. The printing apparatuses displayed in the area 506 are printing apparatuses found by the print plugins searching the network 100. In a case where a plurality of printing apparatuses can be used, corresponding printing apparatuses are found by the plugins as illustrated in Fig. 5A.

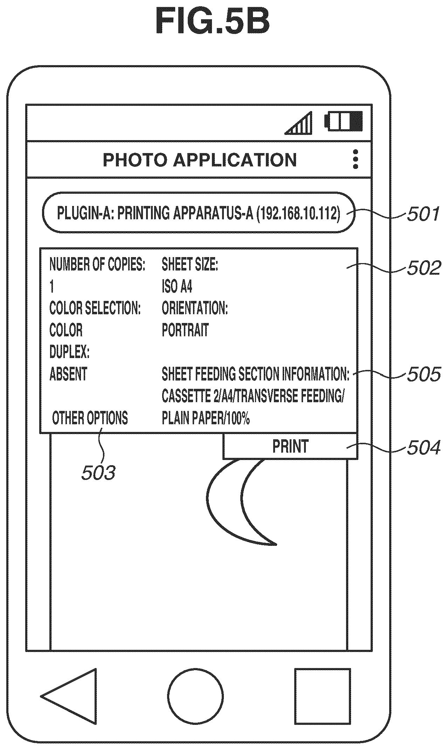

As in the area 506, the plugin-A detects a printing apparatus-A (Internet Protocol (IP) address 192.168.10.112). The plugin-B detects a printing apparatus-B (IP address 192.168.10.210). Further, the plugin-C detects a printing apparatus-C (IP address 192.168.10.302). As a result, it is indicated that three printing apparatuses are available printing apparatuses. Then, the user can select a desired printing apparatus from these found printing apparatuses. In the present exemplary embodiment, it is assumed that the printing apparatus-A found by the plugin-A is selected from the area 506. Based on the selection of the printing apparatus-A, the display changes as illustrated in Fig. 5B.

Fig. 5B illustrates an example of a print settings screen displayed on a display section by the printing system 301 provided by the OS. An area 501 displays information regarding the currently selected printing apparatus. If the user selects the area 501, Fig. 5A is displayed, and the printing apparatus can be changed. A print settings screen 502 is an area for changing print settings, and print settings regarding standard functions can be changed. The standard print functions refer to print functions that can be displayed using the print function provided by the OS, and include the settings of the number of copies to be printed and the color mode when printing is performed, the setting regarding duplex printing, and the settings regarding the sheet size and the sheet type.

An object 503 is an item for displaying extended settings. As described above, on the screen illustrated in Fig. 5B, the settings of only setting items that can be displayed using the printing system 301 provided by the OS can be changed. Accordingly, print settings are extended using the plugin-A 305.

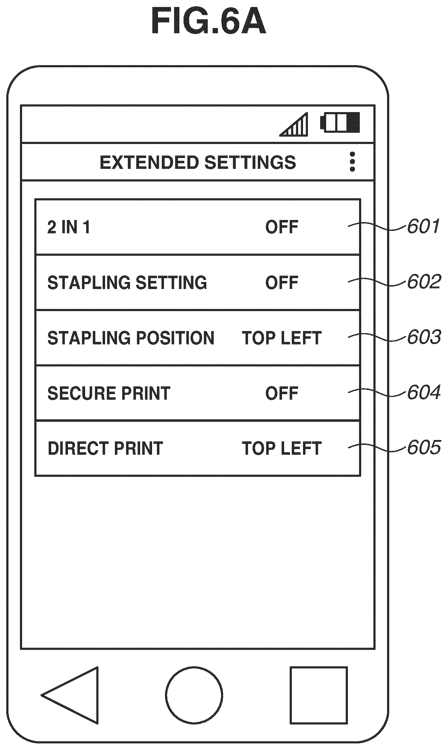

If the object 503 is selected, the UI display module 309 of the plugin-A 305 starts, and an extended settings screen as illustrated in Fig. 6A can be displayed. Fig. 6A illustrates an example of an extended settings screen of a print plugin and illustrates a screen where setting items that cannot be set on the print settings screen in Fig. 5B can be set. In addition to the items illustrated in Fig. 6A, a setting item specific to the printer vendor, such as a setting item regarding stapleless binding for binding sheets by pressure bonding, may be able to be set.

A "print" button 504 is an object for the user to give an instruction to perform printing. If the "print" button 504 is selected, the printing system 301 transmits a print command to the plugin-A 305 corresponding to the printing apparatus that is being selected in the area 501. Based on the print command from the printing system 301, the plugin-A 305 generates print data and transmits the print data to the printing apparatus 102.

An area 505 is an area that displays information regarding the printing apparatus that is being selected. Conventionally, on a print settings screen provided by the printing system 301 of the OS, information regarding each printing apparatus cannot be confirmed. Thus, to confirm information regarding a printing apparatus to be used, the user needs to start a print plugin corresponding to the printing apparatus that the user wishes to use, and confirm the information. In the present exemplary embodiment, a print plugin provides information regarding a printer acquired from the printing apparatus to the printing system 301, whereby the information regarding the printing apparatus can be displayed on the print settings screen 502. Further, in the first exemplary embodiment, information regarding the printing apparatus according to the setting values set when the print settings screen 502 is displayed is displayed. In this manner, even in a case where the amount of information that can be displayed is limited due to the size of the area 505, information according to the settings can be displayed.

With reference to flowcharts, processing executed by the information processing apparatus 101 according to the first exemplary embodiment is described below.

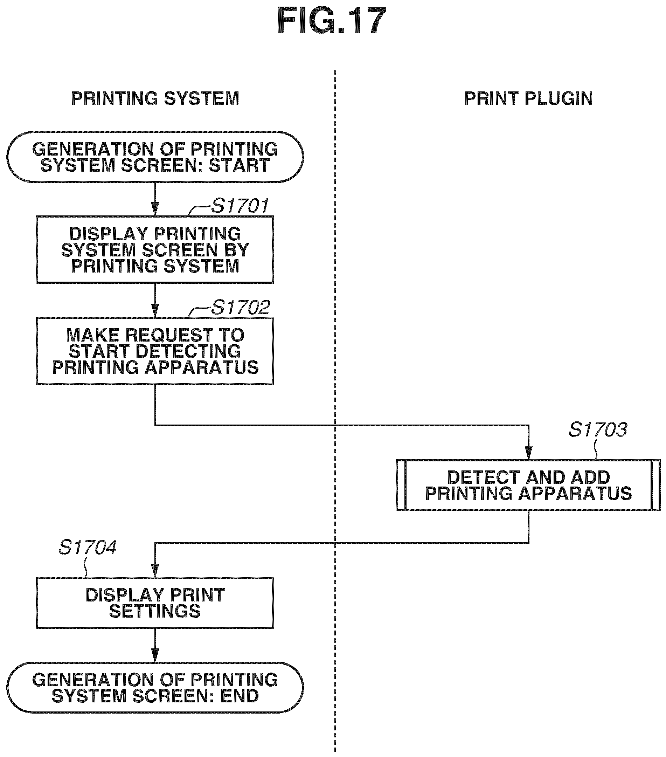

Fig. 17 is a flowchart illustrating processing executed when the printing system 301 is called by the app-A 302. The processing illustrated in Fig. 17 is achieved by loading programs for the printing system 301 and the print plugin 305 stored in the storage 202 of the information processing apparatus 101 into the RAM 203 and by the CPU 204 executing the programs.

Fig. 17 is started based on the selection of the print menu 402 in Fig. 4.

In step S1701, the printing system 301 displays the area 506. At the stage of step S1701, the frame of the area 506 is merely displayed, and information regarding a printing apparatus is not displayed.

In step S1702, the printing system 301 requests print plugins registered in the printing system 301 to start detecting a printing apparatus. In the present exemplary embodiment, the printing system 301 transmits a search request to search for a printing apparatus to the plugin-A 305, the plugin-B 306, and the plugin-C 307 as the print plugins.

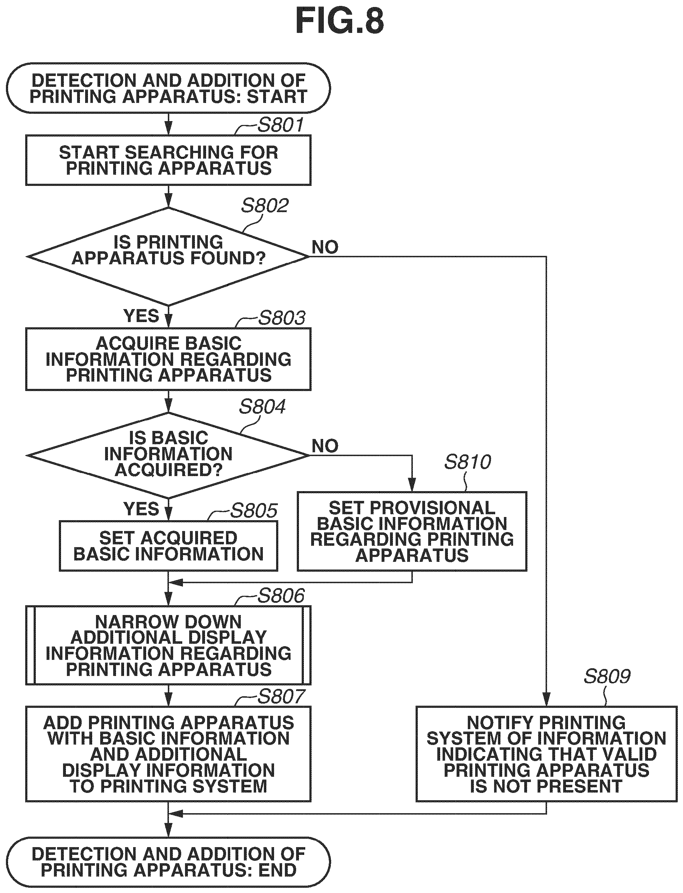

The process of step S1703 is performed by each print plugin that has received the search request. A description is given using the plugin-A 305 as an example. The plugin-A 305 searches for a printing apparatus connected to the network 100. The plugin-A 305 searches for a printing apparatus by a search method specific to the vendor that provides the plugin. The plugin-A 305 may search for a printing apparatus using the printing apparatus search function provided by the OS of the information processing apparatus 101. With reference to Fig. 8, the details of the process of step S1703 are described.

Fig. 8 illustrates the flow of processing in which the print plugin searches for a printing apparatus and notifies the printing system 301. The processing illustrated in Fig. 8 is achieved by loading a program provided by the print plugin into the RAM 203 and by the CPU 204 executing the program.

In step S801, according to the specification of SNMP, the plugin-A 305 broadcasts to the network 100 in which the information processing apparatus 101 participates. Then, the plugin-A 305 searches for a printing apparatus connected to the network. Step S801 is a process for the information processing apparatus 101 to search for a printing apparatus connected to the network 100 using SNMP.

In step S802, the plugin-A 305 determines whether a printing apparatus is detected. If a printing apparatus is not found in step S802 (NO in step S802), then in step S809, the plugin-A 305 notifies the printing system 301 of information indicating that "a valid printing apparatus is not present". If an SNMP response to the broadcasting is received within a predetermined time (e.g., one second) after step S801 is performed, the plugin-A 305 executes the process described in step S803. The processes described in steps S804 to S807 are processing on a printing apparatus with which the print plugin can perform printing among network devices detected by the search by the plugin-A 305.

In step S803, the plugin-A 305 inquires of the printing apparatus found in step S802 using SNMP communication about ability information regarding the printing apparatus as basic information regarding the printing apparatus. The information about which the plugin-A 305 inquires is only general information such as whether the printing apparatus is compatible with color printing and whether the printing apparatus can perform duplex printing. In step S803, the plugin-A 305 acquires information regarding setting items on a print settings screen and setting values that can be set in the setting items.

In step S804, the plugin-A 305 determines whether the acquisition of the basic information is completed.

If the basic information is acquired (YES in step S804), then in step S805, the plugin-A 305 sets the acquired basic information as compatible functions of which the plugin-A 305 is to notify the printing system 301.

If the basic information is not acquired (NO in step S804), then in step S810, the plugin-A 305 sets basic information set in advance as compatible functions of which the plugin-A 305 is to notify the printing system 301.

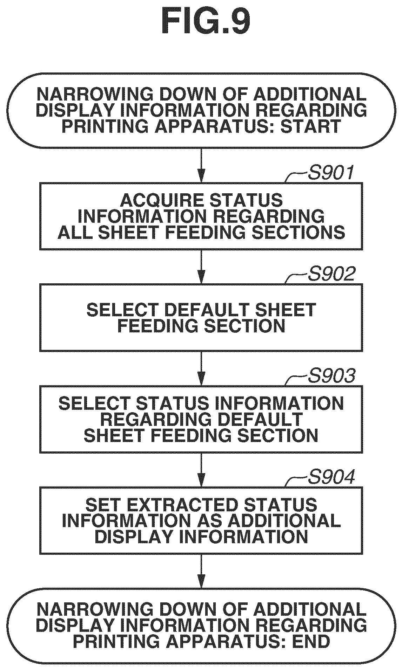

Next, in step S806, the plugin-A 305 performs processing regarding the narrowing down of additional display information regarding the printing apparatus. Fig. 9 is the flow of the processing executed by the plugin-A 305 in step S806. The processing illustrated in Fig. 9 is achieved by loading a program for the plugin-A 305 into the RAM 203 and by the CPU 204 executing the program. The processing illustrated in Fig. 9 is executed on the printers detected by the search in step S801 and all the printers corresponding to the plugin-A 305.

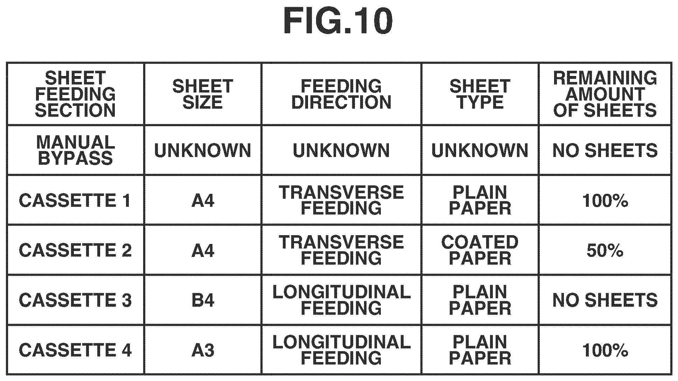

If the narrowing down of the additional display information regarding the printing apparatus is started, then in step S901, the plugin-A 305 inquires of the printing apparatus 102 about information regarding sheet feeding sections. The inquiry in step S901 is made using SNMP communication. Fig. 10 is a table illustrating an example of the information regarding the sheet feeding sections acquired in step S901. A "sheet feeding section" column indicates the name of each sheet feeding section of the printing apparatus 102. Fig. 10 indicates that the printing apparatus 102 includes "manual bypass", "cassette 1", "cassette 2", "cassette 3", and "cassette 4". "Sheet size" indicates the size of a sheet registered in the printing apparatus 102 in association with each sheet feeding section. Fig. 10 indicates that a sheet size "A4" is registered in association with "cassette 1". In Fig. 10, the sheet size corresponding to the sheet feeding section "manual bypass" is "unknown". This indicates that the sheet size corresponding to the sheet feeding section "manual bypass" is not registered in the printing apparatus 102. A "feeding direction" column indicates the direction of paper feeding set in association with each cassette. "Transverse feeding" indicates that a quadrilateral sheet is conveyed with the long side of the sheet first. "Longitudinal feeding" indicates that a quadrilateral sheet is conveyed with the short side of the sheet first. A "sheet type" column indicates information regarding a sheet type registered in the printing apparatus 102 in association with each sheet feeding section. If "sheet type" is "unknown", this indicates that a particular sheet type is not registered for this sheet feeding section. A "remaining amount of sheets" column is information regarding the remaining amount of sheets detected by a sensor of each sheet feeding section. "No sheets" indicates that sheets are not placed in this sheet feeding section. For example, it is indicated that in the sheet feeding section "manual bypass", the sheet size, the feeding direction, and the sheet type are all unknown, and sheets are not placed. On the other hand, it is indicated that in the cassette 1, the placement of plain paper of the A4 size in the transverse feeding direction is set, and in the cassette 1, sheets corresponding to the capacity of the cassette 1 are placed.

In step S902, the plugin-A 305 selects a default sheet feeding section when the printing apparatus is selected. The default sheet feeding section may be a sheet feeding section set in advance for the plugin-A 305, or may be a sheet feeding section selected based on a response from the printing apparatus 102 as a result of an inquiry made to the printing apparatus 102. In the first exemplary embodiment, the cassette 1 is the default sheet feeding section of the printing apparatus 102.

Then, in step S903, the plugin-A 305 selects status information that is information regarding the default cassette 1 and indicates that the sheet size is A4, the feeding information is transverse feeding, the sheet type is plain paper, and the remaining amount of sheets is 100% in the information in Fig. 10.

In step S904, the plugin-A 305 sets the status information selected in step S902 as the additional display information and ends the narrowing down of the additional display information regarding the printing apparatus.

Then, in step S807, the plugin-A 305 notifies the printing system 301 of information regarding the printing apparatus detected by the search. Further, the plugin-A 305 notifies the printing system 301 of the basic information obtained in step S803 and the additional display information in step S805. The returning of the additional display information to the printing system may be the transmission of a character string, or may be the transmission of a bitmap or an image. In the present exemplary embodiment, it is assumed that the plugin-A 305 notifies the printing system 301 of the information regarding the printing apparatus, the basic information regarding the printing apparatus, and the additional display information using a single application programming interface (API). However, the plugin-A 305 may notify the printing system 301 of each of the information regarding the printing apparatus, the basic information regarding the printing apparatus, and the additional display information using a different API.

Referring back to step S1704 in Fig. 17, the printing system 301 displays a printing system screen. The printing system 301 displays Fig. 5A on the display section.

If the user selects the printing apparatus-A 102 found by the plugin-A 307 from the area 506 in Fig. 5A, the print settings screen illustrated in Fig. 5B is displayed. A menu for changing the print settings is displayed on the print settings screen 502. In the present exemplary embodiment, the area 505 displays the information obtained in step S903, i.e., "cassette 1/A4/transverse feeding/plain paper/100%".

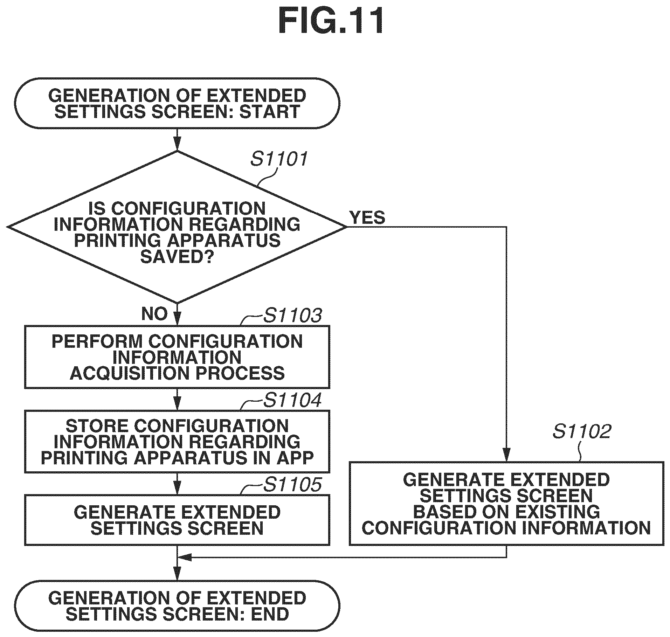

Fig. 11 illustrates a flowchart in a case where the user selects the object 503, i.e., "other options", from a printing system screen of the printing system 301 illustrated in Fig. 5B. The processing illustrated in Fig. 11 is achieved by loading a program for the plugin-A 305 into the RAM 203 and by the CPU 204 executing the program. The processing illustrated in Fig. 11 is executed according to the selection of the object 503 in Fig. 5B.

The information processing apparatus 101 displays the extended settings screen illustrated in Fig. 6A. On an extended settings screen specific to a print plugin, a function that differs from vendor to vendor is implemented. On this screen, the print plugin can add a unique function.

In step S1102, the plugin-A 305 determines whether configuration information regarding the printing apparatus that is being selected in the area 501 is saved in the print plugin.

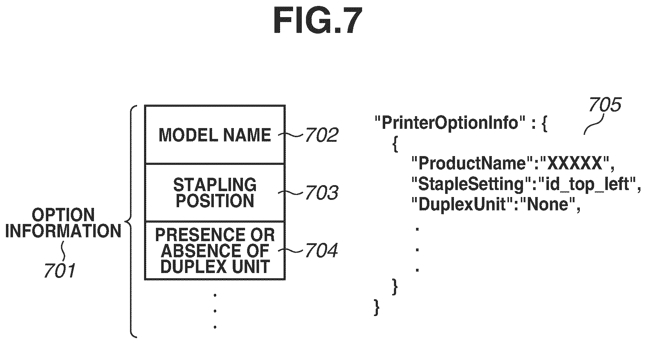

Fig. 7 illustrates a schematic diagram 701 of the data structure of the configuration information. The configuration information includes information 702 indicating the model name of the printing apparatus, information 703 regarding the stapling position, and information 704 regarding a duplex printing unit. Fig. 7 illustrates an example 705 of the details of data of which the plugin-A 305 is actually notified as the configuration information. "ProductName" is information corresponding to the information 702 indicating the model name. "StapleSetting" is information corresponding to the information 703 regarding the stapling. In the present exemplary embodiment, "StapleSetting" is "id_top_left", and this indicates that a single staple is driven at the top left of a sheet. In a case where the printing apparatus cannot execute stapling, "StapleSetting" is "None". "DuplexUnit" is information corresponding to the information 704 regarding the duplex printing unit. In the present exemplary embodiment, "DuplexUnit" is "None", and this indicates that the duplex printing unit is not attached to the printing apparatus, and the printing apparatus cannot perform duplex printing.

By the process of acquiring the configuration information, it is possible to acquire information regarding optional functions with which the printing apparatus is compatible, such as what option and finisher are attached to the printing apparatus. The configuration information is saved in association with the media access control (MAC) address of the printing apparatus in the plugin-A 305. That is, the plugin-A 305 saves a single piece of configuration information in association with a single printing apparatus.

If the configuration information regarding the printing apparatus 102 is saved in the plugin-A 305 (YES in step S1102), the plugin-A 305 executes the process described in step S1102.

In step S1102, the plugin-A 305 causes the information processing apparatus to display an extended settings screen based on the configuration information stored in the plugin-A 305. The setting values and the ranges of setting items that can be set on the extended settings screen are determined based on the configuration information corresponding to the printing apparatus that is being selected in the area 501.

If the configuration information regarding the printing apparatus is not saved in the plugin-A 305 in step S1101 (NO in step S1101), then in step S1104, the plugin-A 305 performs the process of acquiring the configuration information.

In step S1103, from a printing apparatus corresponding to the information regarding the printing apparatus that is being selected in the area 501, the plugin-A 305 acquires configuration information regarding this printing apparatus. The process of acquiring the configuration information is performed by directly communicating with the printing apparatus using a protocol dedicated to acquiring information. The configuration information may be acquired using a standard such as the Internet Printing Protocol.

In step S1104, the plugin-A 305 stores the acquired configuration information in association with information that allows the unique identification of the apparatus, such as the MAC address of the printing apparatus, in a storage area to which the plugin-A 305 refers. Regarding the area where the configuration information is stored, the configuration information is saved in the non-volatile storage 202 so that the information does not need to be reacquired even in a case where the information processing apparatus 101 is restarted.

In step S1105, according to the configuration information acquired in step S1104, the plugin-A 305 generates an extended settings screen as illustrated in items 601 to 605 in Fig. 6A. The extended settings screen generated by the plugin-A 305 in step S1105 is displayed on the display section of the information processing apparatus 101.

In the present exemplary embodiment, in step S1103, the configuration information is acquired and stored in the storage area to which the plugin-A 305 refers. The configuration information may be acquired from the printing apparatus detected by the search in step S803 in Fig. 8, and the configuration information may be stored in the area to which the plugin-A 305 refers.

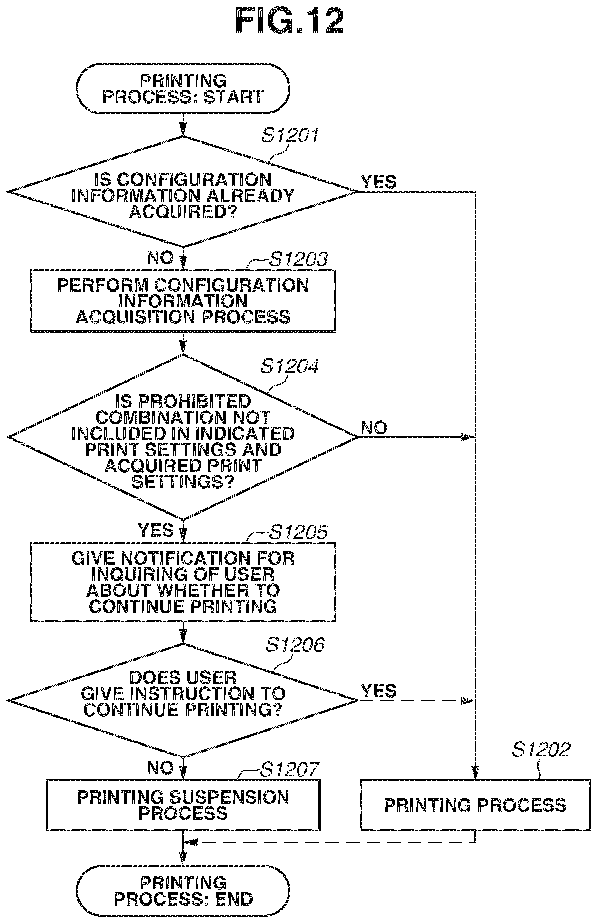

If the user selects the "print" button 504 illustrated in Fig. 5B, the printing system 301 identifies a print plugin corresponding to the information regarding the printing apparatus that is being selected in the area 501. The printing system 301 gives a print instruction to the identified print plugin 305. According to this instruction, the print plugin 305 performs the processing of a flowchart illustrated in Fig. 12. The processing illustrated in Fig. 12 is achieved by storing a program for the plugin-A 305 in the RAM 203 and by the CPU 204 executing the program.

In step S1201, the plugin-A 305 determines whether the configuration information regarding the printing apparatus corresponding to the information regarding the printing apparatus that is being selected in the area 501 is already acquired. The plugin-A 305 determines whether the configuration information regarding the printing apparatus is stored in a storage area to which this plugin can refer.

If the configuration information regarding the printing apparatus as the printing target is already acquired (YES in step S1201), then in step S1202, the plugin-A 305 performs a printing process. In the printing process, the plugin-A 305 receives image data and print settings from the printing system 301. The plugin-A 305 converts the image data received from the printing system 301 into print data in a format that can be interpreted by the printing apparatus, and transmits the print data to the printing apparatus.

If the configuration information corresponding to the printing apparatus as the printing target is not already acquired in the determination of step S1201 (NO in step S1201), the processing proceeds to step S1203. The plugin-A 305 performs the process of acquiring the configuration information regarding the printing apparatus. The method of the process of acquiring the configuration information regarding the printing apparatus is similar to that in step S1103.

In step S1204, based on the configuration information regarding the printing apparatus acquired in step S1203, the plugin-A 305 determines whether a prohibited combination of setting values is not included in the print settings received from the printing system 301.

If a prohibited combination of setting values is not included in the received print settings (NO in step S1204), the plugin-A 305 executes the process of step S1202.

If it is determined in step S1204 that a prohibited combination of setting values is included in the received print settings (YES in step S1204), the plugin-A 305 executes the process described in step S1205.

In step S1205, the plugin-A 305 causes the information processing apparatus 101 to display a notification for inquiring of the user about whether to continue the printing process. For example, in the case of Android OS, examples of the notification include a method for using an API that displays a Nortification in a notification bar and allowing the user to select whether to continue the printing process with the notification bar.

If the user gives an instruction to continue the printing in step S1206 (YES in step S1206), the plugin-A 305 transmits a print job with the currently set information as it is to the printing apparatus 102. If the user does not give an instruction to continue the printing process in step S1206 (NO in step S1206), then in step S1207, the plugin-A 305 performs a printing suspension process, thereby cancelling the printing. Then, the processing ends. After the printing suspension process is executed in step S1207, the printing system 301 may cause the information processing apparatus 101 to display the screen illustrated in Fig. 5B on which the print settings immediately before the suspension of the printing are reflected.

By the above processing, even in a case where a display area is too narrow to display much information, all information as in information regarding cassette sheet feeding sections of a printing apparatus is narrowed down to information to be displayed, whereby it is possible to display status information. All the information is narrowed down to the information to be displayed, whereby only information regarding a currently initially selected default sheet feeding section is displayed, and it is easy for the user to distinguish necessary status information. Thus, it is possible to increase convenience.

### <Second Exemplary Embodiment>

In the first exemplary embodiment, an example has been illustrated where all information regarding cassette sheet feeding sections of a printing apparatus is narrowed down to information to be displayed, whereby a status is displayed on the print settings screen 502 in a screen displayed by the printing system 301. In a second exemplary embodiment, a description is given of a method for changing status information that is being displayed by the printing system 301 in conjunction with changes in the setting values of print settings made by the user. In this manner, it is possible to display status information according to the changed settings on the print settings screen 502.

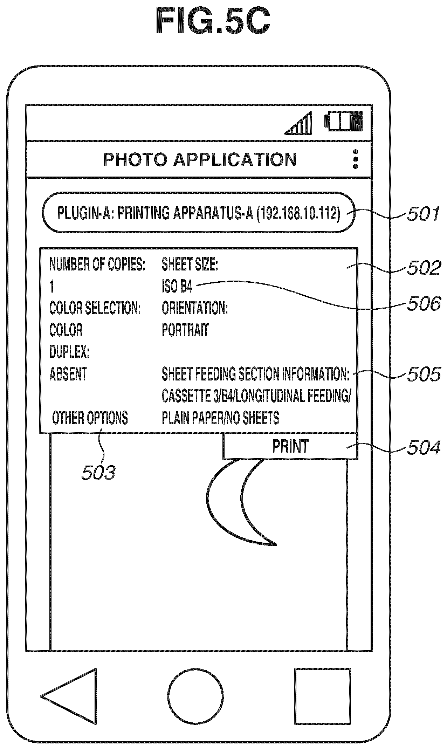

In Fig. 5B, if the user changes the sheet size from "ISO A4" to "ISO B4", an I/F for changing the menu prepared by the plugin-A 305 is called by the printing system 301 at the timing when the user changes the menu. The plugin-A 305 executes this processing, whereby the display on the print settings screen 502 changes as illustrated in Fig. 5C.

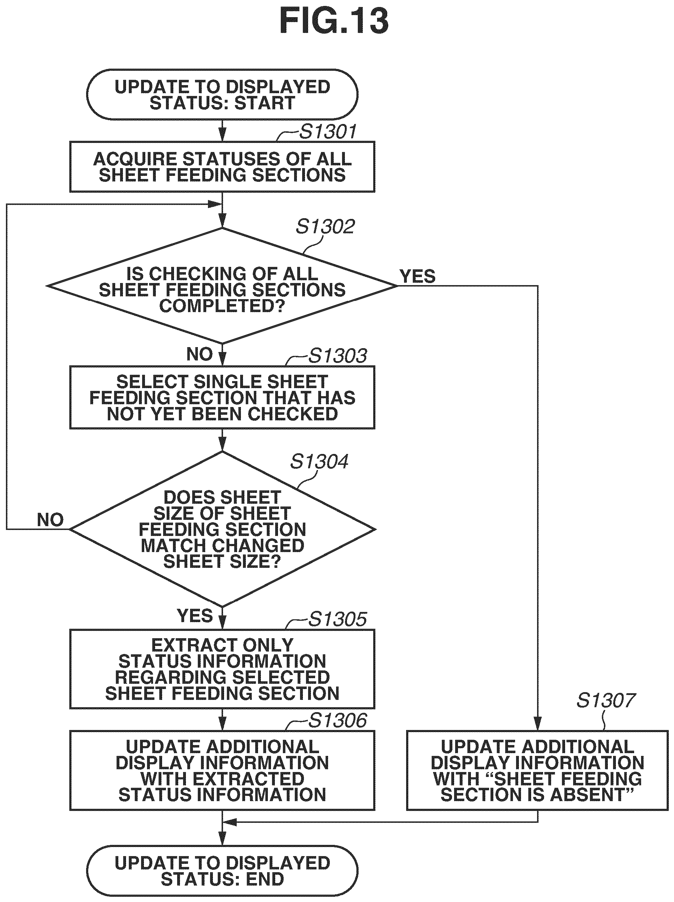

Fig. 13 is a flowchart illustrating the processing executed by the plugin-A 305 when the menu changes in the printing system 301. The processing illustrated in Fig. 13 is achieved by loading a program for the plugin-A 305 into the RAM 203 and by the CPU 204 executing the program.

If an update to the displayed status is started, then in step S1301, the plugin-A 305 acquires the statuses of all the sheet feeding sections. The process of step S1301 is similar to the process of step S901 in Fig. 9.

Next, in step S1302, the plugin-A 305 determines whether the processes of steps S1303 and S1304 are performed on all the sheet feeding sections. If there is an unprocessed sheet feeding section (NO in step S1302), then in step S1303, the plugin-A 305 selects a single sheet feeding section on which the process of step S1304 has not yet been executed.

Then, in step S1304, the plugin-A 305 determines whether the sheet size set in association with the selected sheet feeding section matches the sheet size changed by the user.

If the sheet sizes match each other (YES in step S1304), then in step S1305, the plugin-A 305 acquires only status information regarding the selected sheet feeding section.

In step S1306, the plugin-A 305 notifies the printing system 301 of the selected information as additional information. If the sheet size associated with the selected sheet feeding section does not match the sheet size selected on the print settings screen (NO in step S1304), the processing returns to step S1302.

If there is not an unprocessed sheet feeding section in step S1302 (YES in step S1302), the plugin-A 305 executes the process described in step S1307. In step S1307, the plugin-A 305 notifies the printing system 301 of "sheet feeding section is absent" as additional display information.

For example, a case is considered where the user using the printing apparatus-A 102 corresponding to the plugin-A 305 changes the sheet size from "ISO A4" to "ISO B4". If the information in Fig. 10 is obtained in the acquisition of the information in step S1301, the sheet sizes match each other in the case of the cassette 3. Thus, information regarding the cassette 3, i.e., "cassette 3/B4/longitudinal feeding/plain paper/not sheets", is displayed, and the display changes as illustrated in Fig. 5C.

By the above processing, even in a case where a display area is too narrow to display much information, all information as in information regarding cassette sheet feeding sections of a printing apparatus is narrowed down to information to be displayed in conjunction with information set by the user, whereby it is possible to display status information. All the information is narrowed down to the information to be displayed, whereby only information regarding a sheet feeding section linked to the current user settings is displayed, and it is easy for the user to distinguish necessary status information. Thus, it is possible to increase convenience.

### <Third Exemplary Embodiment>

In the first and second exemplary embodiments, examples have been illustrated where all information regarding cassette sheet feeding sections of a printing apparatus is narrowed down to information to be displayed, whereby a status is displayed in a narrow display area of the printing system 301. In the present exemplary embodiment, a method for displaying a status in the plugin-A 305 is described.

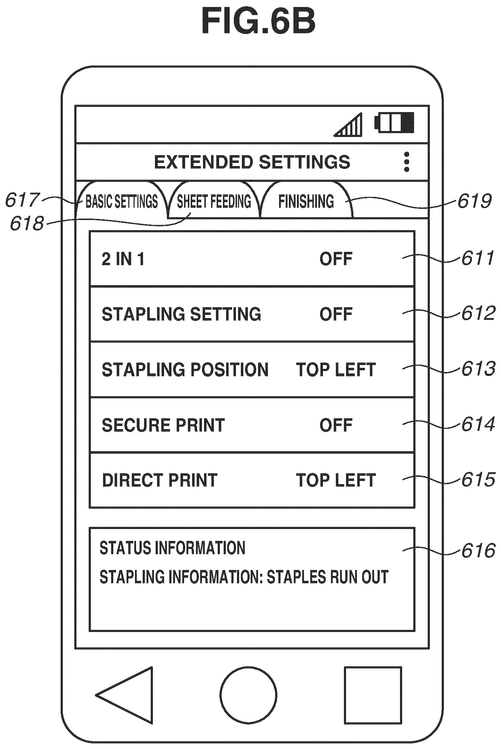

Fig. 6B illustrates an example of an extended settings screen displayed by the plugin-A 305. Fig. 6B illustrates an example of a screen displayed by the plugin-A 305 executing the processing illustrated in Fig. 11 according to the selection of the object 503 in Fig. 5B.

Although in the first exemplary embodiment, the extended settings screen does not display status information as illustrated in Fig. 6A, in the present exemplary embodiment, an area that displays status information as in an area 616 in Fig. 6B is provided. The displayed status information is rewritten by the print plugin according to a tab that is being selected and the value of a menu that is being selected by the user. In the present exemplary embodiment, the extended settings screen is composed of a "basic settings" tab 617, a "sheet feeding" tab 618, and a "finishing" tab 619.

In the third exemplary embodiment, the processes described in steps S1101 to S1104 in Fig. 11 according to the first exemplary embodiment are similar to those in the first exemplary embodiment, and the third exemplary embodiment is different from the first exemplary embodiment in the process described in step S1105.

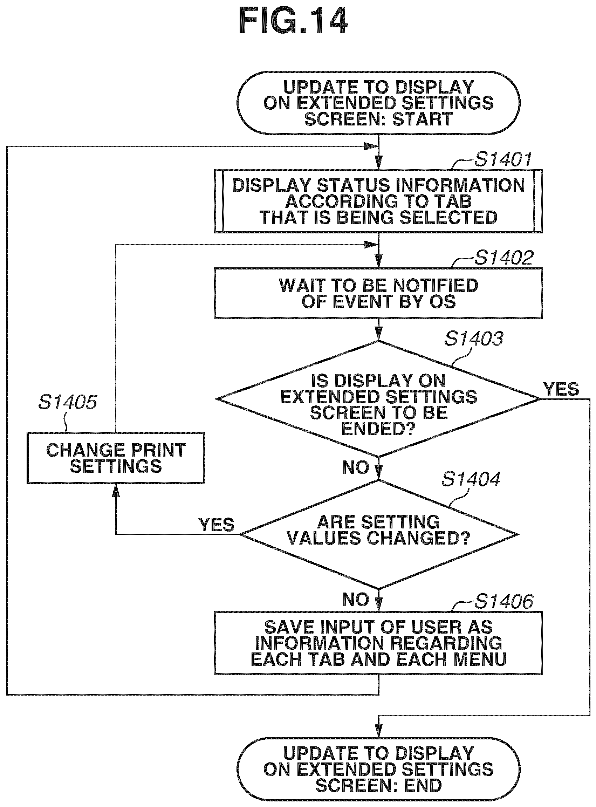

Fig. 14 illustrates a processing flow in which, when an extended settings screen is generated (step S1105 in Fig. 11 in the first exemplary embodiment), the display on the extended settings screen is updated. The processing illustrated in Fig. 14 is achieved by loading a program for the plugin-A 305 into the RAM 203 and by the CPU 204 executing the program.

If an update to the display on the extended settings screen is started, then in step S1401, the plugin-A 305 displays status information according to a tab that is being selected. In the third exemplary embodiment, at the timing when the extended settings screen is called by the printing system 301, the default "basic settings" tab is selected.

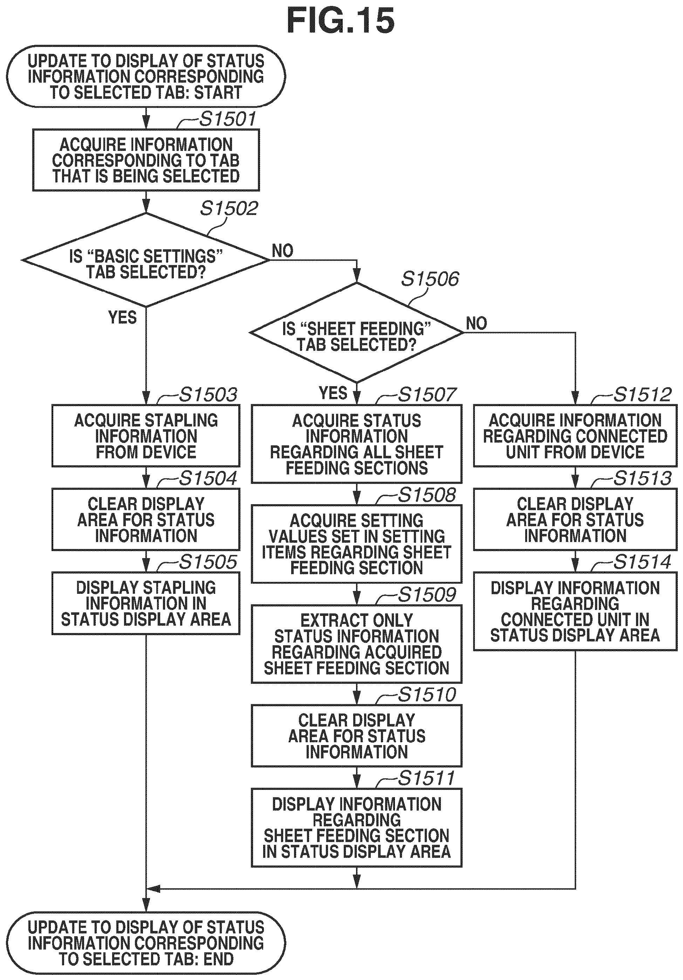

The process of step S1401 will be described below with reference to Fig. 15. The process described in step S1401 is executed, whereby the screen illustrated in Fig. 6B is displayed on the display section of the information processing apparatus 101.

In step S1402, the plugin-A 305 waits to be notified by the OS of the information processing apparatus 101 of an event indicating that an input is provided by the user. Examples of the input provided by the user include changes in the setting values of the setting items, the switching of tabs, and an instruction to end the display on the extended settings screen.

In step S1403, the plugin-A 305 confirms whether the event of which the plugin-A 305 is notified is an event for ending the display on the extended settings screen.

If the display on the extended settings screen is to be ended (YES in step S1403), the plugin-A 305 ends the display on the extended settings screen, and the processing illustrated in Fig. 14 ends. If the display on the extended settings screen is not to be ended, i.e., if the user gives an input (NO in step S1403), the plugin-A 305 executes the process described in step S1404.

In step S1404, the plugin-A 305 determines whether the event of which the plugin-A 305 is notified is an event regarding changes in the setting values of the print settings. If the event is an event regarding changes in the setting values of the print settings, then in step S1405, the plugin-A 305 changes the values of the setting values displayed on the extended settings screen. If the event is not an event regarding changes in the setting values of the print settings in step S1404, this event is the change of tabs. The plugin-A 305 notified of the change of tabs executes the process described in step S1406.

In step S1406, the plugin-A 305 stores information regarding the tab selected by the user. Then, the processing returns to step S1401, and the plugin-A 305 displays status information corresponding to the selected tab.

Fig. 15 illustrates a processing flow in which the display of status information according to a selected tab is updated in the case of the tab configuration as in the "basic settings" tab 617, the "sheet feeding" tab 618, and the "finishing" tab 619 according to the present exemplary embodiment. The processing illustrated in Fig. 15 is achieved by loading a program for the plugin-A 305 into the RAM 203 and by the CPU 204 executing the program.

Fig. 15 illustrates the processing executed in step S1401.

In step S1501, the plugin-A 305 acquires information corresponding to the currently selected tab. If the information corresponding to the tab is acquired in step S1501 at the timing when the extended settings screen is called by the printing system 301, the acquired information is "basic settings". In other cases, information indicating the tab selected by the user is acquired.

In step S1502, the plugin-A 305 confirms whether the tab that is being selected is the "basic settings" tab. If the "basic settings" tab is being selected (YES in step S1502), the plugin-A 305 executes the process described in step S1503.

In step S1503, the plugin-A 305 acquires stapling information such as information regarding the remaining amount of staples from a device.

In step S1504, the plugin-A 305 clears the display area that displays status information. In step S1505, the plugin-A 305 displays the stapling information acquired in step S1503 in the status display area. For example, the "basic settings" tab 617 is selected as illustrated in Fig. 6B, and the stapling information is displayed as status information in the area 616. In Fig. 6B, information indicating that staples run out is displayed. Then, the update to the display of the status information corresponding to the selected tab ends.

If the information corresponding to the tab acquired in step S1502 is not "basic settings", then in step S1506, the plugin-A 305 determines whether the information regarding the acquired tab indicates the "sheet feeding" tab.

If the "sheet feeding" tab is selected, then in step S1507, the plugin-A 305 acquires status information regarding all the sheet feeding sections from the printing apparatus 102. The acquired information is similar to that in step S901 in Fig. 9.

Then, in step S1508, the plugin-A 305 acquires the setting values set in the setting items regarding a sheet feeding section.

Next, in step S1509, the plugin-A 305 selects status information regarding a sheet feeding section that matches the sheet feeding section acquired in step S1508 from the status information regarding all the sheet feeding sections acquired in step S1507. The process described in step S1509 is a process similar to the process of step S1305 in Fig. 13.

Then, in step S1510, the plugin-A 305 clears the display area that displays status information. In step S1511, the plugin-A 305 displays information regarding the sheet feeding section from the information extracted in step S1509 in the status display area.

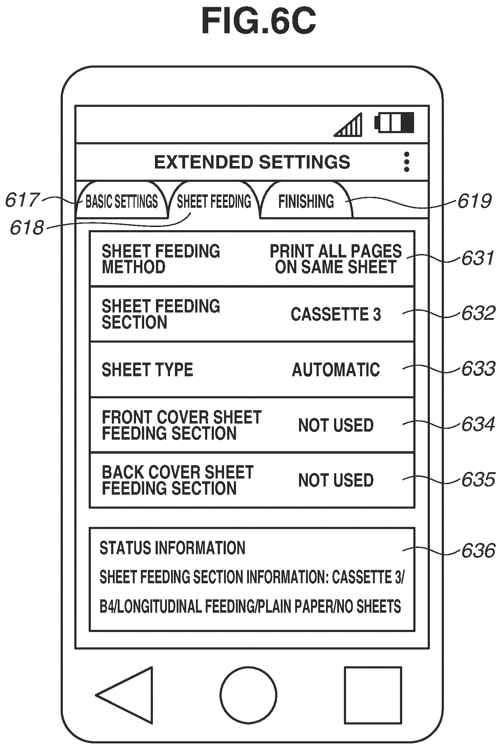

For example, a case is considered where the user selects the "sheet feeding" tab 618 as illustrated in Fig. 6C. Suppose that the user selects the cassette 3 in the sheet feeding section in 632. If the same information as that in Fig. 10 is obtained in step S1507, then in step S1508, the cassette 3 is acquired, and information regarding the cassette 3, i.e., "cassette 3/B4/longitudinal feeding/plain paper/not sheets", in the information in Fig. 10 is displayed as in an area 636 in Fig. 6C.

Next, if the information regarding the acquired tab is not information regarding the "sheet feeding" tab in step S1506 (NO in step S1506), this means that the "finishing" tab is being selected.

In step S1512, the plugin-A 305 acquires information regarding a connected unit from a device. The information regarding the connected unit refers to the type of a post-processing apparatus such as a finisher connected to the printing apparatus 102, the number of sheet discharge trays, and information indicating whether sheets are placed in a sheet discharge tray.

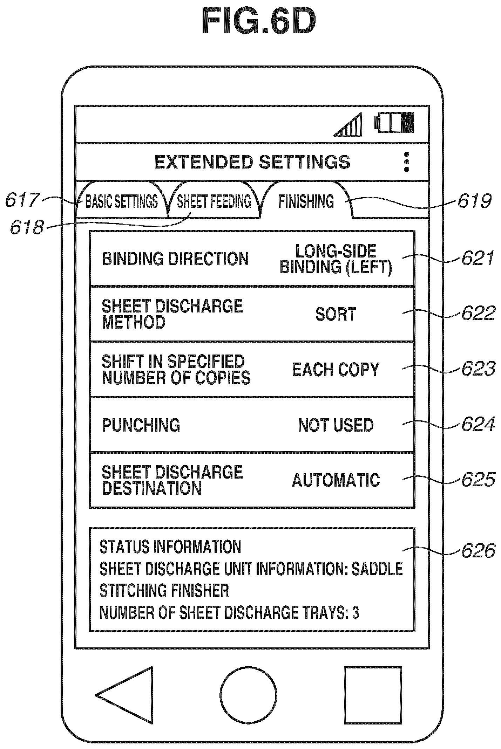

In step S1513, the plugin-A 305 clears the display area that displays status information. In step S1514, the plugin-A 305 displays the information regarding the connected unit acquired in step S1512 in the status display area. If the "finishing" tab 619 is being selected in the display on the extended settings screen, the display changes as illustrated in Fig. 6D. Fig. 6D illustrates an example of the display in a case where a saddle stitching finisher is connected as a sheet discharge unit to the printing apparatus, and the number of sheet discharge trays is three.

In the present exemplary embodiment, the plugin-A 305 stores in advance information indicating which status information is to be displayed regarding each tab. Based on the stored information, the plugin-A 305 acquires status information corresponding to a selected tab from the printing apparatus 102 and displays the status information.

The user may be allowed to set which status information is to be displayed regarding each tab.

As described above, when a status is displayed in a print plugin, and even in a case where a display area is too narrow to display much information, with regard to status information, the display content of the status information is changed in conjunction with tab information in the print plugin and set menu settings. By such display, it is easy for the user to distinguish necessary status information. Thus, it is possible to increase convenience.

In the third exemplary embodiment, at the timing when tabs are switched, status information corresponding to a tab to be displayed is acquired from the printing apparatus 102 and displayed on an extended settings screen. At the timing when an instruction to display an extended settings screen is given or at the timing when information regarding a printing apparatus is selected on a print settings screen displayed by the printing system 301, status information may be acquired from a printing apparatus corresponding to the information regarding the printing apparatus that is being selected.

### <Fourth Exemplary Embodiment>

In the first and second exemplary embodiments, examples have been illustrated where, when all information is narrowed down to information to be displayed, all the narrowed-down information is displayed, thereby performing display in a narrow display area of the printing system 301. In the third exemplary embodiment, an example has been illustrated where, when all information is narrowed down to information to be displayed, all the narrowed-down information is displayed, thereby performing display in a display area of an extended settings screen displayed by a print plugin.

A fourth exemplary embodiment illustrates a method for, when display is performed in a display area of a print settings screen displayed by the printing system 301, controlling the display using a predetermined condition. For example, if the remaining amount of sheets in a sheet feeding section is small, or if the remaining amount of toner in a toner cartridge is small, a print plugin notifies the user using the area 505 in Fig. 5B.

A case is considered where a reference value for the remaining amount of sheets in a sheet feeding section is set to 50% or less. In the case of the information regarding the sheet feeding sections as illustrated in Fig. 10, in the state where the cassette 2 in "sheet feeding section" is selected, in the area 505 in Fig. 5B, "cassette 2/A4/transverse feeding/coated paper/50%" is displayed in 505 in Fig. 5B. In the state where the cassette 3 in "sheet feeding section" is selected, "cassette 3/A4/transverse feeding/coated paper/no sheets" is displayed in the area 505 in Fig. 5B.

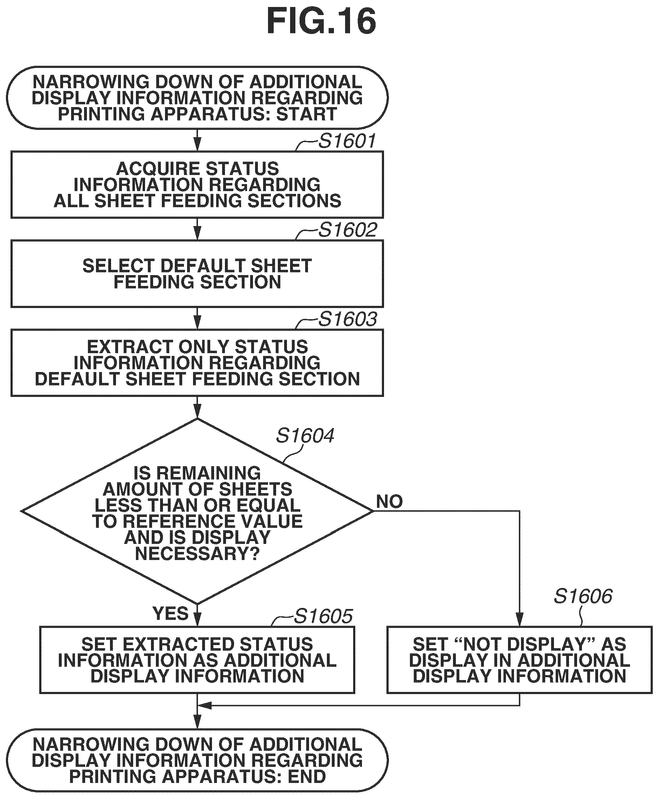

The difference from the first exemplary embodiment is the processing in Fig. 9 performed in step S806 in Fig. 8. If the narrowing down of the additional display information regarding the printing apparatus is started in step S806 in Fig. 8, the processing flow of the narrowing down of the additional display information illustrated in Fig. 16 is performed. The processing illustrated in Fig. 16 is achieved by loading a program for the plugin-A 305 into the RAM 203 and by the CPU 204 executing the program.

In step S1601, similarly to the first exemplary embodiment, the plugin-A 305 inquires of the printing apparatus found in step S802 about information regarding the sheet feeding sections related to the printing apparatus 102 using SNMP communication. Then, the plugin-A 305 acquires the statuses of all the sheet feeding sections. For example, in a case where information regarding the printing apparatus-A 102 is acquired, the information as illustrated in Fig. 10 is obtained similarly to the first exemplary embodiment.

In step S1602, the plugin-A 305 selects a default sheet feeding section of the printing apparatus that is being selected. This selection may be made as a default selection of the print plugin, or may be made by inquiring of the printing apparatus.

Then, in step S1603, the plugin-A 305 acquires only status information regarding the default sheet feeding section and narrows down the information regarding the statuses of all the sheet feeding sections.

Further, in step S 1604, the plugin-A 305 confirms whether the remaining amount of sheets is less than or equal to the reference value held in advance in the program in the storage.

If the remaining amount of sheets indicated by the status information is less than or equal to the reference value (YES in step S1604), then in step S1605, the plugin-A 305 sets the extracted status information as the additional display information, and the processing illustrated in this flowchart ends.

If the remaining amount of sheets indicated by the status information exceeds the reference value (NO in step S1604), then in step S1606, the plugin-A 305 sets "not display" in the additional display information. In this manner, for example, if sufficient sheets are set in the sheet feeding section and there is a high possibility that the user does not need to replenish sheets, a notification can be prevented from being given. On the other hand, if the remaining amount of sheets in the sheet feeding section is small, a notification is given using the area 505, whereby the user can prepare sheets or select a sheet feeding section in which sufficient sheets are set.

For example, in a case where the reference value is set to 50%, and in a case where the information regarding the sheet feeding sections in Fig. 10 is obtained, and if the default sheet feeding section is the cassette 1 or the cassette 4, the determination is NO in step S1604. Thus, step S1606 is executed, whereby "not display" is set in additional display information. If the default sheet feeding section is the cassette 2 or the cassette 3, the determination is YES in step S1604. In the case of the cassette 2, status information indicating that the sheet size is A4, the feeding information is transverse feeding, the sheet type is coated paper, and the remaining amount of sheets is 50% is set in the additional display information. Then, "cassette 2/A4/transverse feeding/coated paper/50%" is displayed in the area 505 in Fig. 5B. In the case of the cassette 3, status information indicating that the sheet size is B4, the feeding information is longitudinal feeding, the sheet type is plain paper, and the remaining amount of sheets is no sheets is set. Then, "cassette 3/A4/transverse feeding/coated paper/no sheets" is displayed in the area 505 in Fig. 5B.

Then, if step S806 ends, then in step S807, the plugin-A 305 returns, to the printing system 301, the basic information obtained in step S803 and the compatible functions or the additional display information obtained in step S805 to the printing system 301. If "not display" is set in step S1606, the printing system 301 does not perform display in the area 505.

As described above, when display is performed in a display area of the printing system 301, the display is controlled using a reference value, whereby it is possible to further reduce information unnecessary for the user. Then, when display is performed in the display area, and even in a case where the display area is too narrow to display much information, status information that does not need to be displayed is not displayed, whereby it is possible to display other status information instead. Then, it is easy for the user to distinguish only necessary status information. Thus, it is possible to increase convenience.

### <Other Exemplary Embodiments>

The status time information used for display is not limited to the above, and may be information regarding a consumable product attached to a sheet feeding section or a printing apparatus. For example, the status time information may be the opening/closing states of the cassettes and various covers of the sheet feeding sections, or errors in and life warnings regarding a drum unit and an intermediate transfer unit. Further, the status time information may be information such as a connection warning regarding a toner cartridge, a warning regarding and an error in a fixing device, a mismatch error in a name given to a sheet, a warning regarding and an error in a waste toner bottle, or the display of and an error in the restriction on the registration of data in a printing apparatus.

In the above exemplary embodiments, in the display of status information, in the case of information regarding a sheet feeding section, only the information regarding the sheet feeding section has been illustrated, and in the case of information regarding stapling, only the information regarding the stapling has been illustrated. However, two or more pieces of information may be displayed in combination.

The present invention can also be realized by executing the following processing: software (program) for realizing the functions of the above-described exemplary embodiments is supplied to a system or an apparatus via a network or various storage media, and a computer (or a CPU or a micro processing unit (MPU)) of the system or the apparatus reads and executes program codes.

The present invention is not limited to the above embodiments, and various modifications and variations can be made without departing from the spirit and scope of the present invention.

This application claims the benefit of Japanese Patent Application No. 2022-157626, filed September 30, 2022, which is hereby incorporated by reference herein in its entirety.

## Claims

1. An application installed on an information processing apparatus, the application comprising:
acquiring a setting value set in an object displayed on the information processing apparatus; and
providing status information acquired from a printing apparatus and selected based on the acquired setting value acquired in the acquiring to an operating system of the information processing apparatus.

2. The application according to Claim 1, wherein in the providing, the status information to be displayed on a display section of the information processing apparatus is provided to the operating system.

3. The application according to Claim 1, wherein in the acquiring, the status information is acquired from the printing apparatus.

4. The application according to Claim 1, wherein the status information is displayed by an application that is different from the application and provides image data to be printed.

5. The application according to Claim 1, wherein the status information is information regarding a consumable product used for printing in the printing apparatus.

6. The application according to Claim 1, further comprising, based on a change in the setting value set in the object, providing status information selected based on the changed setting value to the operating system.

7. The application according to Claim 1, wherein, in a case where status information identified based on the setting value set in the object satisfies a predetermined condition, the status information selected based on the setting value is provided to the operating system.

8. The application according to Claim 1, wherein the application is an application that displays a print settings screen.

9. A control method for an information processing apparatus on which an application is installed, the control method comprising:
acquiring a setting value set in an object displayed on the information processing apparatus; and
providing status information acquired from a printing apparatus and selected based on the acquired setting value acquired in the acquiring to an operating system of the information processing apparatus.

10. The control method according to Claim 9, wherein in the providing, the status information to be displayed on a display section of the information processing apparatus is provided to the operating system.

11. The control method according to Claim 9, wherein in the acquiring, the status information is acquired from the printing apparatus.

12. The control method according to Claim 9, wherein the status information is displayed by an application that is different from the application and provides image data to be printed.

13. The control method according to Claim 9, wherein the status information is information regarding a consumable product used for printing in the printing apparatus.

14. The control method according to Claim 9, further comprising, based on a change in the setting value set in the object, providing status information selected based on the changed setting value to the operating system.

15. The control method according to Claim 9, wherein, in a case where status information identified based on the setting value set in the object satisfies a predetermined condition, the status information selected based on the setting value is provided to the operating system.

16. An information processing apparatus on which a print setting application is installed, the information processing apparatus comprising:
an acquisition unit configured to acquire a setting value set in an object displayed on the information processing apparatus; and
a display unit configured to display status information acquired from a printing apparatus and selected based on the setting value acquired by the acquisition unit.
